(19) Europäisches Patentamt
European Patent Office
Office européen des brevets

(11) EP 3 327 818 B1

(12) FASCICULE DE BREVET EUROPEEN

(45) Date de publication et mention
de la délivrance du brevet:
10.04.2019 Bulletin 2019/15

(51) Int Cl.:
H01M 2/02 (2006.01)          H01M 10/0525 (2010.01)
H01M 10/0585 (2010.01)

(21) Numéro de dépôt: 17201881.4

(22) Date de dépôt: 15.11.2017

(54) **ACCUMULATEUR METAL-ION A EMPILEMENT D'ELECTRODES, A FORTE CAPACITE ET APTE A DELIVRER DES FORTES PUISSANCES**

METALLIONEN BATTERIE MIT EINEM ELEKTRODENSTAPEL AUFWEISEND HOHE KAPAZITÄT UND HOHE LEISTUNG

METAL-ION BATTERY PROVIDED WITH A STACK OF ELECTRODES AND CHARACTERIZED BY HIGH CAPACITY AND HIGH POWER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.11.2016 FR 1661413**

(43) Date de publication de la demande:
**30.05.2018 Bulletin 2018/22**

(73) Titulaire: **Commissariat à l'Energie Atomique et aux Energies Alternatives
75015 Paris (FR)**

(72) Inventeurs:
• **DEWULF, Frédéric
38500 VOIRON (FR)**
• **CHAMI, Marianne
38600 FONTAINE (FR)**

(74) Mandataire: **Nony
11 rue Saint-Georges
75009 Paris (FR)**

(56) Documents cités:
**EP-A1- 2 933 865          JP-A- 2011 018 585
US-A1- 2008 057 392**

**Description**

Domaine technique

La présente invention concerne le domaine des générateurs électrochimiques métal-ion, qui fonctionnent selon le principe d'insertion ou de désinsertion, ou autrement dit intercalation-désintercalation, d'ions métalliques dans au moins une électrode.

Elle concerne plus particulièrement un accumulateur électrochimique métal-ion comprenant un empilement de cellules électrochimiques élémentaires comprenant chacune une anode, une cathode, et un séparateur imprégné d'électrolyte intercalé entre l'anode et la cathode, deux collecteurs de courant dont un est relié à l'anode et l'autre à la cathode, et un emballage de forme allongée selon un axe longitudinal, l'emballage étant agencé pour loger les cellules électrochimiques avec étanchéité tout en étant traversé par une partie des collecteurs de courant formant les bornes de sortie, aussi appelés pôles.

Le séparateur peut être constitué d'un ou plusieurs films.

L'emballage peut être souple ou rigide en constituant un boitier. Le boitier peut comporter un couvercle et un conteneur, usuellement appelé godet, ou comporter un couvercle, un fond et une enveloppe latérale assemblée à la fois au fond et au couvercle.

La présente invention vise à améliorer la dissipation thermique et donc la durée de vie des accumulateurs métal-ion à empilement d'électrodes, et en particulier elle vise à prévoir des accumulateurs à forte capacité, aptes à délivrer des fortes puissances sous des régimes de courant élevés, typiquement compris entre 2C et 5C.

Bien que décrite en référence à un accumulateur Lithium-ion, l'invention s'applique à tout accumulateur électrochimique métal-ion, c'est-à-dire également Sodium-ion, Magnésium-ion, Aluminium-ion...

Art antérieur

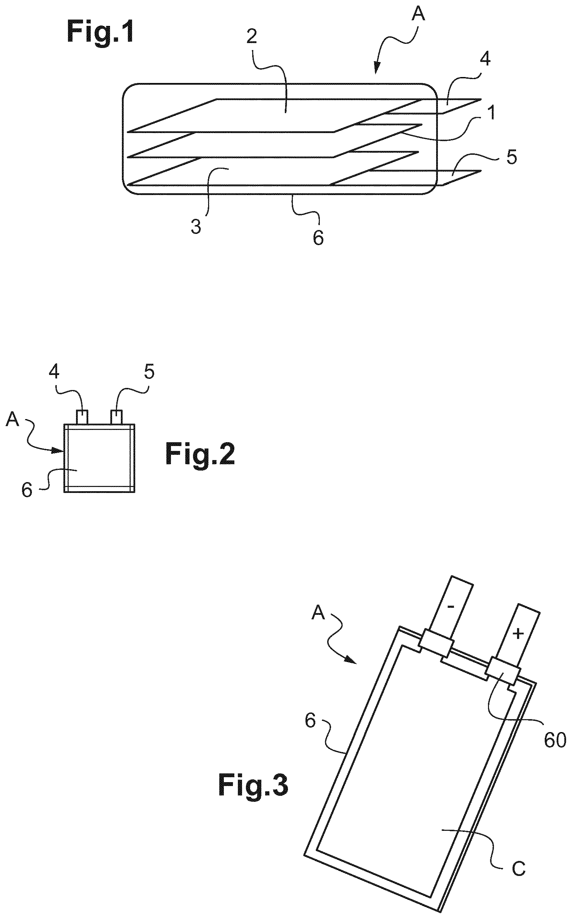

Telle qu'illustrée schématiquement en figures 1 et 2, une batterie ou accumulateur lithium-ion comporte usuellement au moins une cellule électrochimique C constituée d'un séparateur imprégné d'un constituant électrolyte 1 entre une électrode positive ou cathode 2 et une électrode négative ou anode 3, un collecteur de courant 4 connecté à la cathode 2, un collecteur de courant 5 connecté à l'anode 3 et enfin, un emballage 6 agencé pour contenir la cellule électrochimique avec étanchéité tout en étant traversé par une partie des collecteurs de courant 4, 5, formant les bornes de sortie.

L'architecture des batteries lithium-ion conventionnelles est une architecture que l'on peut qualifier de monopolaire, car avec une seule cellule électrochimique comportant une anode, une cathode et un électrolyte. Plusieurs types de géométrie d'architecture monopolaire sont connus :

- une géométrie cylindrique telle que divulguée dans la demande de brevet US 2006/0121348,
- une géométrie prismatique telle que divulguée dans les brevets US 7348098, US 7338733;
- une géométrie en empilement telle que divulguée dans les demandes de brevet US 2008/060189, US 2008/0057392, et brevet US 7335448. JP 2011 018585 A décrit un accumulateur lithium-ion, comprenant un empilement de cellules électrochimiques comprenant chacune une cathode, une anode et un séparateur imprégné d'électrolyte intercalé entre l'anode et la cathode. Ladite anode est constituée d'un collecteur métallique supportant une couche de matériau actif, ledit matériau actif ayant une porosité variable dans l'empilement.

Le constituant d'électrolyte peut être de forme solide, liquide ou gel. Sous cette dernière forme, le constituant peut comprendre un séparateur en polymère ou en composite microporeux imbibé d'électrolyte (s) organique (s) ou de type liquide ionique qui permet le déplacement de l'ion Lithium de la cathode à l'anode pour une charge et inversement pour une décharge, ce qui génère le courant. L'électrolyte est en général un mélange de solvants organiques, par exemple des carbonates dans lesquels est ajouté un sel de lithium typiquement LiPF6.

L'électrode positive ou cathode est constituée de matériaux d'insertion du cation Lithium qui sont en général composite, comme le phosphate de fer lithié $LiFePO_4$, l'oxyde de cobalt lithié $LiCoO2$, l'oxyde manganèse lithié, éventuellement substitué, $LiMn_2O_4$ ou un matériau à base de $LiNi_xMn_yCo_zO_2$ avec x+y+z = 1, tel que $LiNi_{0.33}Mn_{0.33}Co_{0.33}O_2$, ou un matériau à base de $LiNi_xCo_yAl_zO_2$ avec x+y+z = 1, $LiMn_2O_4$, $LiNiMnCoO_2$ ou l'oxyde de nickel cobalt aluminium lithié $LiNiCoAlO_2$.

L'électrode négative ou anode est très souvent constituée de carbone, graphite ou en $Li_4Ti_5O_{12}$ (matériau titanate), éventuellement également à base de silicium ou à base de lithium, ou à base d'étain et de leurs alliages ou de composite formé à base de silicium. Cette électrode négative tout comme l'électrode positive peut également contenir des additifs conducteurs électroniques ainsi que des additifs polymères qui lui confèrent des propriétés mécaniques et des performances électrochimiques appropriées à l'application batterie lithium-ion ou à son procédé de mise en oeuvre.

L'anode et la cathode en matériau d'insertion au Lithium peuvent être déposées en continu selon une technique usuelle sous la forme d'une couche active sur une feuille ou feuillard métallique constituant un collecteur de courant.

Le collecteur de courant connecté à l'électrode positive est en général en aluminium.

Le collecteur de courant connecté à l'électrode négative est en général en cuivre, en cuivre nickelé ou en aluminium.

Traditionnellement, une batterie ou accumulateur Li-ion utilise un couple de matériaux à l'anode et à la cathode lui permettant de fonctionner à un niveau de tension typiquement entre 1,5 et 4,2 Volt.

Selon le type d'application visée, on cherche à réaliser soit un accumulateur lithium-ion fin et flexible soit un accumulateur rigide : l'emballage est alors soit souple soit rigide et constitue dans ce dernier cas en quelque sorte un boitier.

Les emballages souples sont usuellement fabriqués à partir d'un matériau composite multicouche, constitué d'un empilement de couches d'aluminium recouvertes par un ou plusieurs film(s) en polymère laminés par collage.

La figure 3 illustre ce type d'emballage souple 6 qui est agencé pour contenir la cellule électrochimique C avec étanchéité tout en étant traversé par une partie 40, 50 de deux lamelles 4, 5 formant les pôles et qui s'étendent dans le plan de la cellule électrochimique. Comme montré en figure 3, des renforts en polymère 60 à base de polyoléfine peuvent être prévus pour améliorer le scellage à chaud de l'emballage 6 autour des lamelles 4, 5. L'avantage principal des emballages souples est leur légèreté. Les accumulateurs Li-ion avec les plus grandes densités d'énergie comportent de ce fait un emballage souple. L'inconvénient majeur de ces emballages souples est que leur étanchéité se détériore fortement au cours du temps du fait de la non-tenue chimique du scellage réalisé.

Les emballages rigides sont quant à eux utilisés lorsque les applications visées sont contraignantes où l'on cherche une longue durée de vie, avec par exemple des pressions à supporter bien supérieures et un niveau d'étanchéité requis plus strict, typiquement inférieure à $10^{-8}$ mbar.l/s, ou dans des milieux à fortes contraintes comme le domaine aéronautique ou spatial.

L'avantage principal des emballages rigides est ainsi leur étanchéité élevée et maintenue au cours du temps du fait que la fermeture des boitiers est réalisée par soudure, en générale par soudure au laser.

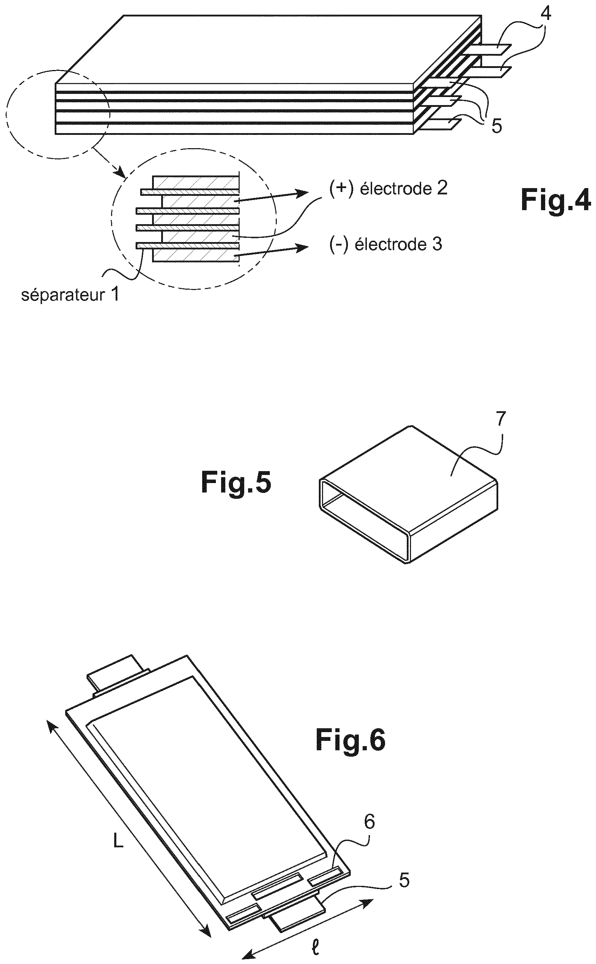

On a représenté schématiquement en figure 4, un accumulateur Li-ion d'architecture en empilement de cellules électrochimiques élémentaires comprenant chacune un séparateur imprégné d'un constituant électrolyte 1 intercalé entre une cathode 2 et une anode 3. Comme visible sur cette figure 4, les collecteurs de courant 4, 5 destinés à assurer la sortir du courant sont généralement agencés d'un même côté latéral de l'empilement.

Cet empilement de forme prismatique peut être destiné à être logé dans une enveloppe latérale de forme parallélépipédique 7 (figure 5) qui constitue une partie d'un boitier rigide également de forme prismatique.

Un tel boitier prismatique a pour principaux avantages :

- de permettre une dissipation de chaleur sur les faces des cellules empilées qui sont de grande surface unitaire, et donc d'augmenter la taille des électrodes et par-là la capacité des cellules ;
- de pouvoir s'intégrer physiquement, facilement dans un pack batterie en minimisant le volume mort restant, grâce à leurs faces planes.

On a représenté en figure 6, un accumulateur Li-ion d'architecture en empilement de forme prismatique avec un emballage souple 6, avant qu'il soit intégré et assemblé au sein d'un module formant un pack-batterie.

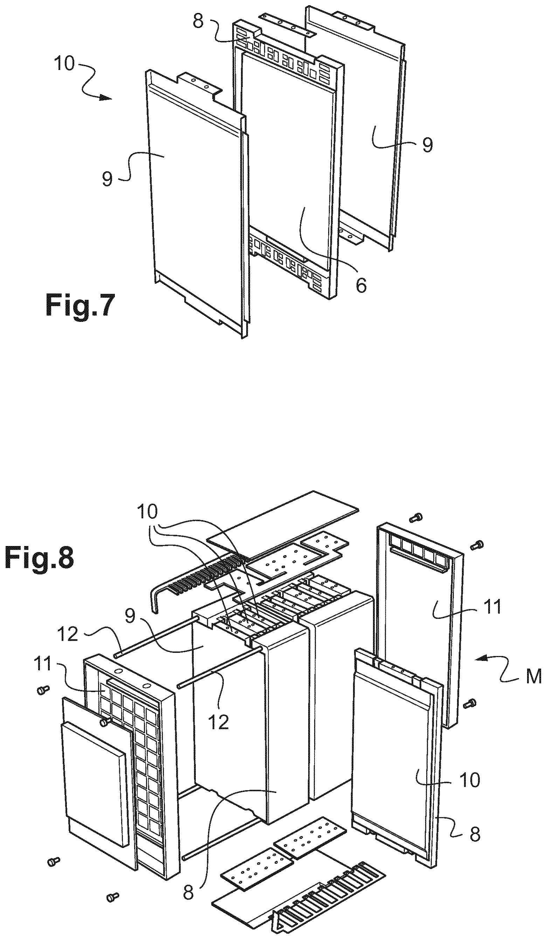

Comme illustré en figure 7, un tel accumulateur à empilement et emballage souple 6 est tout d'abord maintenu dans un support rigide 8 sous la forme d'un cadre ouvert. Une fois le maintien réalisé, deux plaques de renfort mécanique 9 sont fixées de part et d'autre du cadre 8. Ces plaques de renfort mécanique 9 sont destinées à contenir l'empilement lorsqu'il augmente sous l'effet du gonflement des électrodes usuelles. On constitue ainsi un sous-ensemble mécanique 10.

Puis, comme montré en figure 8, pour réaliser un module M formant un pack-batterie, on empile une pluralité de sous-ensemble mécaniques 10 encadrés de part et d'autre de plaques de fermeture 11, les sous-ensemble mécaniques 10 et les plaques de fermeture 11 étant au final assemblés entre eux au moyen de tirants boulonnés 12.

Ce module M présente les mêmes avantages que ceux précités des accumulateurs individuels à boitier prismatique

Ainsi, parmi les designs d'accumulateurs Li-ion, la géométrie prismatique avec un empilement d'électrodes s'avère très intéressante pour les applications de hautes densités d'énergie, grâce à sa faculté à dissiper aisément la chaleur produite lors du fonctionnement.

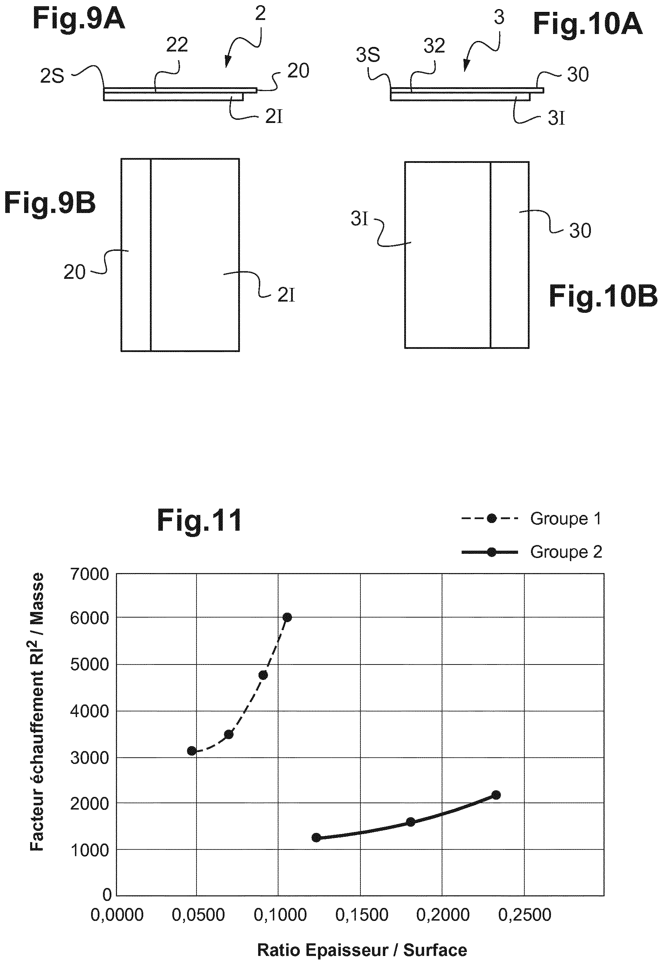

On a représenté, respectivement en figures 9A et 9B et en figures 10A et 10B, une électrode positive ou cathode 2 et une électrode négative ou anode 3 à partir desquelles un empilement de cellules élémentaires avec chacune comprenant un séparateur 4 intercalé entre cathode 2 et anode 3. La cathode 2 est constituée d'un substrat 2S formé d'un feuillard métallique qui supporte dans sa portion centrale 22, une couche continue de matériau actif d'insertion au lithium 2I, tandis que sa bande latérale (rive) 20 est dépourvue de matériau actif d'insertion. De même, l'anode 3 est constituée d'un substrat 3S formé d'un feuillard métallique qui supporte dans sa portion centrale 32, une couche continue de matériau actif d'insertion au lithium 3I, et sa rive 30 est dépourvue de matériau actif d'insertion. Chaque feuillard métallique 2S, 3S est réalisé en un seul tenant, c'est-à-dire avec les mêmes caractéristiques géométriques et métallurgiques sur toute sa surface.

Par « bande non revêtue » ou « rive », on entend ici et dans le cadre de l'invention, une portion latérale d'une feuille métallique, aussi appelée feuillard, formant un collecteur de courant, qui n'est pas recouverte d'un matériau d'insertion aux ions métal, tel que le lithium dans le cas d'un accumulateur Li-ion.

Ces électrodes 2, 3 pour accumulateurs Li-ion sont réalisés usuellement selon un process en continu par une technique d'enduction du matériau d'insertion actif sur le feuillard métallique afin de constituer la couche continue active. Ces techniques d'enduction sont connues sous les termes anglo-saxons « slot die » ou « roll to roll transfert ».

Bien que satisfaisants sur de nombreux aspects, les accumulateurs Li-ion de forme prismatique à empilement d'électrodes, en particulier ceux à forte capacité et aptes à délivrer de fortes puissances, posent des problématiques importantes de dissipation thermique dûes à leur design intrinsèque.

En effet, comme expliqué ci-après et mis en évidence par des résultats d'étude, lors de leur fonctionnement sous passage de courant en mode charge ou décharge, des échauffements se produisent au sein des accumulateurs Li-ion prismatiques à empilement d'électrodes.

On pourra se reporter tout d'abord aux publications [1] et [2] qui étudient l'influence du type de design des accumulateurs Li-ion de géométrie prismatique à empilement d'électrodes.

En particulier, la publication [2] révèle l'influence des dimensions que sont la largeur, hauteur et l'épaisseur d'un accumulateur Li-ion prismatique à empilement d'électrodes.

Dans cette publication [2], le comportement thermique de quatre accumulateurs prismatiques de formats différents, est étudié. Les résultats divulgués montrent que l'accumulateur de plus petite taille donc avec une faible capacité, présente une meilleure dissipation thermique.

A contrario, dès qu'un accumulateur prismatique de plus forte capacité est envisagé, ce dernier doit préférentiellement présenter une surface large et une épaisseur totale la plus fine possible, afin d'éviter l'accumulation de chaleur au coeur de l'empilement.

Il ressort ainsi cette publication [2], que des accumulateurs relativement fins et de grandes surfaces permettent une meilleure dissipation thermique.

Cela étant, selon les courants impliqués typiquement à un régime supérieur à 2C, la position des connectiques devient cruciale, de tels accumulateurs nécessitent l'utilisation de connectiques de collecteur de courant larges, agencées sur les bords longitudinaux de l'empilement, de manière opposée l'une à l'autre et ce, afin d'optimiser le flux des électrons et ainsi d'éviter que les régions à proximité des connectiques ne soient sollicitées majoritairement par rapport au reste l'accumulateur.

On rappelle ici que comme défini usuellement, un régime 1C signifie une valeur de courant correspondant à 1 fois la valeur de la capacité nominale de l'accumulateur. Ainsi pour un accumulateur de 10Ah, une décharge à régime de 1C signifie que l'on décharge sous un courant de 10A.

La configuration d'agencement des connectiques à l'opposé l'une de l'autre par rapport à la surface de l'empilement d'un accumulateur implique des conséquences lorsqu'on souhaite réaliser une batterie, usuellement appelé pack-batterie, par assemblage d'une pluralité d'accumulateurs prismatiques à empilement, reliés en série ou en parallèle électrique entre eux.

En effet, dans cette configuration, deux zones à l'intérieur de la batterie doivent être dégagées pour procéder à la liaison électrique des connectiques +/- entre accumulateurs. Cette configuration peut alors s'avérer plus consommatrice d'espace, ce qui diminue la densité d'énergie volumique (en Wh/Litre) de la batterie dans son ensemble.

A ce jour, pour des applications nécessitant à la fois de l'énergie en vue d'une forte autonomie, mais aussi de la puissance, il est le plus souvent mis en oeuvre un assemblage d'accumulateurs de densité d'énergie élevée, mais de plus petites dimensions et donc de plus faible capacité.

Ces accumulateurs de petites dimensions présentent une résistance interne électrique élevée. Il est alors nécessaire de procéder à une mise en parallèle d'une quantité importante d'accumulateurs, typiquement dans un facteur fois 20 à fois 50 plus pour obtenir une quantité d'énergie équivalente à celle qui serait embarquée par un assemblage d'accumulateurs de plus grandes dimensions et donc de plus forte capacité.

Autrement dit, il serait bien plus intéressant pour le dimensionnement d'un pack-batterie de même niveau d'énergie, d'utiliser des accumulateurs prismatiques à empilement de grandes dimensions, de grande surface et de plus forte capacité en augmentant l'épaisseur totale de chaque accumulateur et avec des connectiques agencées du même côté de chaque accumulateur pour concentrer l'ensemble des connexions entre accumulateurs à l'intérieur du pack-batterie dans une même zone, de préférence sur une seule face.

Les inventeurs ont procédé à des essais comparatifs pour mettre en évidence cet intérêt mais aussi la limitation qu'il y a à utiliser des accumulateurs actuels d'épaisseur totale élevée du fait des échauffements qu'ils induisent.

Les essais ont été réalisés à partir d'accumulateurs prismatiques à empilement de type Lithium-polymère commercialisés sous la dénomination commerciale SLPB par la société coréenne KOKAM.

Deux groupes d'accumulateurs ont été comparés :

- le premier groupe, ci-après désigné groupe 1, concerne des accumulateurs commercialisés sous la référence commerciale « SLPB xxx 460330 », avec une capacité affichée de 100Ah à 240Ah pour une épaisseur totale allant de 7mm à 16mm.
- le deuxième groupe, ci-après désigné groupe 2, concerne des accumulateurs commercialisés sous la référence commerciale «SLPB xxx 216216», avec une capacité affichée de 25Ah à 53Ah pour une épaisseur totale allant de 6mm à 12mm.

Le tableau 1 ci-dessous résume les différentes caractéristiques dimensionnelles et de masse ainsi que le calcul de ratio entre épaisseur et surface pour chacun des accumulateurs des groupes 1 et 2.

On précise que tous les accumulateurs sont logés dans des emballages souples.

**TABLEAU 1**

| Groupe | Référence commerciale | Capacité (Ah) | Energie (Wh) | Largeur (mm) | Longueur (mm) | Surface S (mm$^2$) | Epaisseur E (mm) | Volume (1) | Ratio E/S (m$^{-1}$) |
|---|---|---|---|---|---|---|---|---|---|
| 1 | SLPB70460330 | 100 | 370 | 462 | 327 | 151074 | 7 | 1,06 | 0,0463 |
| | SLPB120460330 | 150 | 555 | | | | 10,5 | 1,59 | 0,0695 |
| | SLPB140460330 | 200 | 740 | | | | 13,7 | 2,07 | 0,0907 |
| | SLPB140460330 | 240 | 888 | | | | 15,8 | 2,39 | 0,1046 |
| 2 | SLPB60216216 | 25 | 92,5 | 226 | 227 | 51302 | 6,3 | 0,32 | 0,1228 |
| | SLPB90216216 | 40 | 148 | | | | 9,3 | 0,48 | 0,1813 |
| | SLPB120216216 | 53 | 196,1 | | | | 12 | 0,62 | 0,2339 |

Il ressort de ce tableau que le ratio épaisseur/surface (E/S) est environ trois fois plus important pour les accumulateurs du groupe 1 comparativement à ceux du groupe 2.

En conditions adiabatiques, la relation entre l'énergie thermique dégagée et l'énergie produite par effet joule sous passage du courant dans un accumulateur est la suivante :

$$m. \times Cp \times dT = R. \times I^2 \times t : (1)$$

dans laquelle:

m représente la masse de l'accumulateur, en grammes,
Cp représente la Chaleur massique ou capacité calorifique moyenne de l'ensemble des constituants de l'accumulateur (en J/ g.°C),
dT représente la variation de température,
R représente la résistance interne de l'accumulateur, en mOhms,
I représente la valeur du courant traversant l'accumulateur, en ampère,
et t représente le temps.

Après vérification expérimentale, on retient que la nature électrochimique et la proportion des constituants des accumulateurs Li-ion sont équivalentes quel que soit le groupe 1 ou 2.

Ceci permet d'appliquer dans la formule (1) ci-dessus une valeur Cp de chaleur massique, constante pour les deux groupes 1 et 2.

On en déduit l'expression suivante pour la détermination de la variation de température sous passage de courant :

$$dT = 1/ Cp \times (RI^2 / m) \times t.$$

En faisant l'hypothèse que la valeur Cp de chaleur massique est quasi constante pour tous les formats d'une même électrochimie, on peut donc estimer que, pour un laps de temps donné (t), la variation de température (dT) est directement proportionnelle au ratio $(RI^2/m)$.

Le tableau 2 ci-dessous résume le calcul du facteur d'échauffement $RI^2/m$ pour chacun des accumulateurs des groupes 1 et 2 considérés au tableau ci-dessus.

**TABLEAU 2**

| Groupe | Référence commerciale | Masse (kg) | Résistance interne (mOhm) | Régime C | Courant continu (ampère) | Puissance dissipée par effet Joule $RI^2$ (W) | Facteur $RI^2/m$ (.m$^{-1}$) |
|---|---|---|---|---|---|---|---|
| 1 | SLPB70460330 | 2,07 | 0,65 | 1 | 100 | 6500 | 3140 |
| | SLPB120460330 | 3,21 | 0,5 | | 150 | 11250 | 3505 |
| | SLPB140460330 | 4,18 | 0,5 | | 200 | 20000 | 4785 |
| | SLPB140460330 | 4,78 | 0,5 | | 240 | 28800 | 6025 |
| 2 | SLPB60216216 | 0,6 | 1,2 | 1 | 25 | 750 | 1250 |
| | SLPB90216216 | 0,9 | 0,9 | | 40 | 1440 | 1600 |
| | SLPB120216216 | 1,16 | 0,9 | | 53 | 2528 | 2179 |

A partir des données des tableaux 1 et 2, on peut tracer pour chacun des deux groupes 1 et 2, les courbes respectives du facteur d'échauffement $(RI^2/m)$ en fonction du ratio épaisseur/surface (E/S).

Ces courbes sont illustrées en figure 11.

A la lecture de ces courbes, on constate qu'à régime de passage de courant 1C équivalent, soit à densité de courant similaire pour les deux groupes 1 et 2 d'accumulateurs, le groupe 2, i.e. celui de surface la plus faible et donc avec un ratio E/S plus grand, présente une évolution du coefficient d'échauffement moins élevée.

Cette tendance se vérifie lorsque l'épaisseur de l'accumulateur et donc de l'empilement des électrodes qui le constituent, augmente (ratio E/S croissant), en comparaison du groupe 1 de surface plus importante.

On précise ici que si les conditions adiabatiques ne sont plus vérifiées pour les accumulateurs de petites surfaces, le raisonnement reste vrai en maximisant le facteur d'échauffement.

Ce comportement différent confirme que les accumulateurs de dimensions les plus importantes en surface (groupe 1), et dont les conditions thermiques seront proches de conditions adiabatiques, sont préférentiellement utilisées à des régimes de courant faible, typiquement inférieur à 2C) contrairement aux accumulateurs de dimensions plus faibles (groupe 2) qui peuvent convenir aux besoins de courants plus élevés, typiquement atteignant 3C à 5C ou davantage encore en cas utilisation en puissance.

En résumé, les accumulateurs Li-ion prismatiques à empilement d'électrodes, et plus généralement métal-ion, notamment à forte capacité présentent des limites dans leur design.

Une première limite de design est une grande épaisseur car, au-delà d'une certaine valeur d'épaisseur, des échauffements localisés apparaissent qui induisent une baisse de durée de vie et des performances avec notamment un fort risque de dysfonctionnement électrique et de sécurité. Ces échauffements localisés sont directement liés à la part de résistance ionique de la cellule électrochimique et aux conditions limites contraignant l'évacuation de la puissance thermique dégagée.

Une deuxième limite est une grande surface car, au-delà d'une certaine valeur de surface, le régime de passage de courant doit être abaissé au risque de voir se produire des échauffements au niveau des connectiques internes.

En effet, dans des accumulateurs d'empilement à grandes surfaces, les lignes de courant qui s'établissent de la périphérie des électrodes jusqu'aux connectiques externes sont plus longues: les électrons ayant plus distance à parcourir, la résistance électronique est de ce fait plus importante.

La proportion de résistance électronique dans la résistance interne globale de l'accumulateur est ainsi prépondérante dans les échauffements.

Il existe donc un besoin d'améliorer la durée de vie et les performances des accumulateurs au lithium, et plus généralement des accumulateurs métal-ion, notamment à forte capacité, qui sont réalisés par empilement d'électrodes.

En particulier, il existe un besoin d'améliorer la dissipation thermique au sein des accumulateurs au lithium, et plus généralement des accumulateurs métal-ion, notamment à forte capacité, en vue délivrer des puissances élevées, sous des régimes de courant élevés, typiquement compris entre 2C et 5C.

Le but de l'invention est de répondre au moins en partie à ce(s) besoin(s).

Exposé de l'invention

Pour ce faire, l'invention concerne, sous l'un de ses aspects, un accumulateur métal-ion, comprenant un empilement de cellules électrochimiques élémentaires comprenant chacune une cathode, une anode, et un séparateur imprégné d'électrolyte intercalé entre l'anode et la cathode, chaque anode et cathode étant constituée d'un substrat formé d'un feuillard métallique comprenant une portion centrale supportant, sur au moins une de ses faces principales, une couche de matériau actif d'insertion d'ion métal, la porosité des couches de matériau actif d'au moins une électrode d'une des polarités données (anode, cathode) ayant au moins deux valeurs différentes dans l'empilement, la porosité la plus élevée étant celle d'au moins une électrode de ladite polarité, agencée entre le centre et les extrémités de l'empilement.

Ainsi, l'invention consiste essentiellement à adapter la porosité de couche de matériau actif d'insertion d'électrodes d'une polarité donnée (anode, cathode) en fonction de sa position dans l'empilement de l'accumulateur.

Cette possibilité de porosité supérieure d'électrodes d'une polarité donnée va permettre de faciliter le drainage de courant à régime élevé, typiquement entre 2C et 5C Max, en partie centrale (coeur) de l'empilement de l'accumulateur prismatique, ce qui va aider à limiter la part de résistance ionique de cette partie centrale et par conséquent réduire la part d'énergie générée par effet joule au centre de l'accumulateur.

On peut ainsi obtenir une meilleure dissipation thermique au travers de tout l'empilement de l'accumulateur.

Dans la mise en oeuvre de l'invention, il va de soi que l'on veille à respecter les règles de conception qui impliquent qu'il doit toujours y avoir, par unité de surface, un excès de matériau actif négatif en vis-à-vis du matériau actif positif à base de métal, lithium dans le cas d'un Li-ion.

Si les conditions thermiques limites en face d'extrémité de dessus et de dessous de l'accumulateur sont symétriques, alors l'empilement d'électrodes dans l'épaisseur totale de l'accumulateur doit être de préférence symétrique par rapport au centre de l'empilement de façon à assurer une bonne homogénéité pour le dégagement d'énergie générée par effet joule. La dissipation thermique peut ainsi s'opérer de façon équivalente sur les deux grandes faces de l'accumulateur prismatique selon l'invention.

A contrario, en cas de conditions thermiques limites non symétriques, alors l'empilement peut être de préférence non symétrique par rapport au centre de l'empilement, toujours dans le but d'assurer une bonne homogénéité thermique.

Grâce à l'invention, on peut ainsi réaliser des formats d'accumulateurs à empilement usuellement dédiés à des fortes capacités aptes à délivrer des fortes puissances, sans risque de voir des échauffements localisés trop importants qui dégraderaient la durée de vie.

Autrement dit, adapter l'épaisseur et le grammage de couches actives des électrodes en fonction de leur position dans l'empilement permet d'accéder à des formats d'accumulateurs prismatiques de plus grandes capacités aptes à délivrer de plus fortes puissances sous régimes de courant élevés, que ceux de l'état de l'art tout en conservant un niveau de densité d'énergie élevée.

Typiquement, pour des surfaces équivalentes à celles d'accumulateurs commerciaux, comme ceux des groupes 1 et 2 précités dans les tableaux 1 et 2, en augmentant l'épaisseur totale de l'empilement des électrodes de l'ordre de +5% à 10% maximum, mais répartie avec les différentes porosité d'électrode, selon les conditions thermiques au sein de l'empilement, on peut obtenir des accumulateurs prismatiques de très grande capacité et qui peuvent délivrer des fortes puissances sous des régimes de courant élevés, typiquement compris entre 2C et 5C.

En résumé, les avantages apportés par l'invention sont nombreux parmi lesquels on peut citer :

- la possibilité pour un accumulateur prismatique selon l'invention de fonctionner à des régimes de courant supérieurs à ceux des accumulateurs à empilement selon l'état de l'art, à surface équivalente et épaisseur totale équivalente. Cette possibilité est offerte grâce à une meilleure aptitude à pouvoir dissiper l'énergie générée au cours des phases de charge et de décharge ;
- une meilleure imprégnation de l'électrolyte comparativement à des accumulateurs à empilement selon l'état de l'art. En effet, l'augmentation de la porosité des électrodes d'une polarité dans quelques couches de matière active va permettre de disposer d'une réserve d'électrolyte en partie centrale de l'empilement de l'accumulateur, ce qui va aider à la fois à une meilleure imprégnation de l'électrolyte, en début de vie de l'extérieur jusqu'au coeur de l'accumulateur et à une mouillabilité continue des électrodes et prolongée dans le temps du cycle de vie de l'accumulateur en utilisation ;
- un échauffement plus faible de l'accumulateur, en fonctionnement à forte puissance. Les couches de matières actives les plus poreuses, donc mieux imprégnées par l'électrolyte vont faciliter le transfert des ions métal, comme les ions lithium, par la circulation de l'électrolyte. Autrement dit, la diffusion ionique est facilitée et la résistance électronique diminuée. Cela génère une diminution de la résistance interne à la conduction ionique, ce qui va améliorer l'aptitude au passage de plus fort courant dans l'accumulateur. Aussi, à courant équivalent (ou puissance équivalente) appliqué à un accumulateur selon l'état de l'art, comme ceux présentés dans les tableaux 1 et 2, un accumulateur selon l'invention dégage moins de chaleur, du fait de sa résistance ionique plus faible ;

- une amélioration de la durée de vie. Ainsi, la diminution de l'amplitude thermique évoquée, soit entre le début et la fin de charge, soit entre le début et la fin de décharge, va ralentir le vieillissement électrochimique habituellement observé dans les accumulateurs Li-ion selon l'état de l'art, dans différentes zones sur la surface des électrodes ou du séparateur: zones d'échauffement, zones d'assèchement en électrolyte, zones de dépôt de lithium,....Par conséquent, le nombre de cycles de charge / décharge atteignables jusqu'au critère habituel de fin de vie, typiquement à 80% de la capacité initiale de début de vie va être augmenter pour un accumulateur selon l'invention. Les inventeurs estiment qu'en nombre de Wh chargés et déchargés cumulés, le gain peut aller jusqu'à une valeur de + 20% par rapport à un nombre de cycles habituellement atteignables par un accumulateur selon l'état de l'art
- la possibilité de gains en masse et en volume pour des modules ou pack-batteries comprenant une pluralité d'accumulateurs selon l'invention reliés entre eux en série ou en parallèle électrique. En effet, l'augmentation de la porosité des couches de matière active d'une partie des électrodes d'une polarité va augmenter l'épaisseur totale de ces mêmes couches d'électrodes, ce qui va avoir pour conséquence d'augmenter l'épaisseur totale d'un accumulateur selon l'invention, comparativement à un accumulateur selon l'état de l'art, comme ceux indiqués dans les tableaux 1 et 2 en préambule. Les inventeurs estiment que l'augmentation relative d'épaisseur totale induite et donc de volume d'encombrement peut être de l'ordre de +5% à +10%. Cette augmentation se traduit par une perte d'énergie volumique en Wh/Litre de -5% à -10%, la densité d'énergie massique Wh/kg restant quasiment stable (perte estimée inférieure à -2%).

Mais, la conception d'un accumulateur selon l'invention va, au final, permettre de simplifier l'assemblage interne d'une pluralité d'accumulateurs et ainsi permettre d'apporter un gain en densité d'énergie volumique (Wh/L) et d'énergie Massique (Wh/g) dans une configuration habituelle d'un module batterie de type xS yP ((x S étant le nombre X d'accumulateurs reliés en série et yP étant le nombre Y d'accumulateurs reliés en parallèle), et ce pour les raisons suivantes. Le fait d'introduire dans l'accumulateur, des électrodes plus poreuses que celles usuelles, va dégager un volume supérieur au volume occupé par l'ensemble des ions métal, comme les ions lithium en technologie Li-ion, qui vont s'insérer dans l'épaisseur des couches plus poreuses. Donc, les contraintes mécaniques dans l'épaisseur des électrodes de plus forte porosité vont être réduites et l'épaisseur de ces électrodes plus poreuses va très faiblement augmentée au cours du cyclage de l'accumulateur. Par ailleurs, les autres couches d'électrodes de la même polarité, moins poreuses vont chercher à s'épaissir au fil des cycles d'insertion (en charge) et désinsertion des ions métal (en décharge). Cette variation d'épaisseur va créer des contraintes mécaniques et phénomènes de compression au sein de l'empilement global des électrodes. Par contre, les électrodes plus poreuses pourront amortir une partie de ces forces de compression et ainsi réduire l'effet d'épaississement de l'empilement global. Autrement dit, les couches de matière active à porosité plus élevée conformément à l'invention amènent une amélioration du comportement mécanique de l'empilement.

Plus particulièrement, cette amélioration mécanique peut se traduire pour un assemblage en module d'accumulateurs prismatiques à emballages souples par une suppression de plaques de renfort métallique usuellement mises en place pour compenser l'effet de compression dû à l'augmentation importante du volume de l'empilement dans les accumulateurs selon l'état de l'art. Typiquement, si l'on se réfère à l'assemblage présenté aux figures 7 et 8 commentées en préambule, avec des accumulateurs selon l'invention, il est possible de s'affranchir de la présence des plaques de renfort 9. La suppression de ces plaques de renfort habituellement intercalées entre deux accumulateurs adjacents pour constituer le module M va permettre de libérer du volume à l'intérieur de celui-ci. Les inventeurs estiment que le gain de volume libéré peut être de l'ordre de +5% à +15%, ce qui implique un allégement significatif de la masse totale d'un module M dans les proportions inverses de l'ordre de -5 à -15%.

En résumé, avec des accumulateurs selon l'invention à emballage souple dans une configuration du type de celle montrée en figure 6, il est envisageable de compenser une diminution de la densité d'énergie volumique à l'échelle d'un accumulateur, estimée de -5% à -10%, par une simplification de la conception d'un module dans lequel une pluralité d'accumulateurs est assemblée. Cela conduit à un gain de masse et de volume se traduisant en un gain en densité d'énergie volumique (Wh/L) et en densité d'énergie massique (Wh/kg) pouvant atteindre +10% dans certains cas. Enfin, cette construction simplifiée de module batteries peut avoir également un impact non négligeable sur le coût global de solution de pack batteries.

Les avantages et conclusions faites ci-dessus pour un module avec accumulateurs à emballage souple vaut également pour des accumulateurs selon l'invention à géométrie prismatique logés dans un boitier rigide, comme le boitier 7 montré en figure 5. En effet, pour l'assemblage en module, des plaques de renfort sont le plus souvent également intercalées entre boitiers rigides adjacents, afin à la fois de rigidifier l'ensemble du module et d'absorber les éventuelles variations d'épaisseurs des accumulateurs au cours du cyclage. Donc, un assemblage en module d'accumulateurs à porosité différenciée selon l'invention logés dans des boitiers rigides de forme prismatique va permettre au moins d'alléger voire s'affranchir des plaques intercalées lors de la construction d'un module.

Selon une caractéristique avantageuse, la porosité la plus faible est comprise entre 33 et 36%, tandis que la porosité la plus élevée est comprise entre 39 et 45%.

Selon un mode de réalisation avantageux, l'épaisseur des couches de matériau actif des électrodes d'une même polarité (anode ou cathode) a au moins deux valeurs différentes au sein de l'empilement, l'épaisseur la plus faible étant celle des électrodes au centre de l'empilement, à l'exception de l'épaisseur des couches des électrodes à la porosité plus élevée.

Ainsi, on diminue l'épaisseur de matière active d'insertion à l'exception de l'épaisseur des couches plus poreuses dans les zones susceptibles d'être soumises à des conditions thermiques importantes, lors de la durée de vie de l'accumulateur.

Les zones les plus concernées par ces conditions thermiques plus contraignantes sont celles vers le centre de l'empilement.

Plus la surface d'électrode et donc de matière active d'insertion est importante plus on prévoit de variations progressives d'épaisseur d'électrodes. Typiquement, en fonction des caractéristiques de l'accumulateur que l'on recherche, on peut réaliser 12 à 15 niveaux d'épaisseur différents pour des accumulateurs d'épaisseur totale de l'ordre de 20mm.

Les épaisseurs des couches actives des électrodes négative et positive augmentent ou diminuent de préférence de façon identique en fonction de leur position dans l'empilement, à l'exception des couches à porosité plus élevée.

Selon une variante avantageuse, la porosité des couches de matériau actif de l'électrode négative la plus faible est comprise entre 28 et 36%, tandis que la porosité la plus élevée est comprise entre 37 et 45%.

Selon une autre variante avantageuse, la porosité des couches de matériau actif de l'électrode positive la plus faible est comprise entre 21 et 31%, tandis que la porosité la plus élevée est comprise entre 32 et 42%.

Avantageusement, l'épaisseur des couches de matériau actif des électrodes d'une même polarité (anode ou cathode) a au moins deux valeurs différentes au sein de l'empilement, l'épaisseur la plus faible étant celle des électrodes au centre de l'empilement, à l'exception de l'épaisseur des couches des électrodes à la porosité plus élevée.

Les électrodes de porosité la plus élevée sont de préférence des électrodes négatives.

Selon une variante avantageuse, la variation d'épaisseur des électrodes négatives et/ou des électrodes positives entre le centre et les extrémités de l'empilement étant comprise entre 20 et 200 $\mu$m.

De préférence,

- la couche de matériau actif des électrodes négatives en extrémité d'empilement présente une épaisseur supérieure à 150 $\mu$m;
- la couche de matériau actif des électrodes négatives au centre de l'empilement, à l'exception de la couche de matériau actif des électrodes de plus grande porosité, présente une épaisseur inférieure à 150 $\mu$m;

- la couche de matériau actif des électrodes positives en extrémité d'empilement présente une épaisseur supérieure à 225 $\mu$m ;
- la couche de matériau actif des électrodes positives au centre de l'empilement présente une épaisseur inférieure à 225 $\mu$m.

Le feuillard d'électrodes peut présenter avantageusement une épaisseur comprise entre 10 et 20 $\mu$m. Le feuillard peut être en aluminium ou en cuivre.

Selon un mode de réalisation particulièrement avantageux, l'accumulateur peut comprendre deux groupes d'électrodes négatives et positives à porosité moindre et un groupe d'électrodes négatives à porosité la plus élevée, l'épaisseur de couches de matériau actif d'une même polarité étant différente entre les deux groupes à porosité moindre, le premier groupe d'électrodes à porosité moindre étant agencé aux extrémités d'empilement, le second groupe à porosité moindre étant agencé au centre de l'empilement, avec au moins une électrode négative du groupe à porosité plus élevée intercalée dans le deuxième groupe de porosité moindre.

L'invention a également pour objet l'utilisation de l'accumulateur qui vient d'être décrit pour des applications de type puissance correspondant à des régimes de courant typiquement compris entre 2C et 5C.

L'invention a enfin pour objet une batterie ou accumulateur au métal-ion, tel qu'un accumulateur lithium-ion (Li-ion) décrit précédemment, comportant un emballage souple ou un boitier rigide dans lequel l'empilement est logé.

De préférence,

- le boitier est à base d'aluminium;
- le feuillard métallique d'électrode(s) négative(s) est en cuivre ;
- le matériau actif d'insertion d'électrode(s) négative(s) est choisi dans le groupe comportant le graphite, le lithium, l'oxyde de titanate Li4Ti5O12 ; ou à base de silicium ou à base de lithium, ou à base d'étain et de leurs alliages;
- le feuillard métallique d'électrode(s) positive(s) est en aluminium;
- le matériau actif d'insertion d'électrode(s) positive(s) est choisi dans le groupe comportant le phosphate de fer lithié LiFePO4, l'oxyde de cobalt lithié LiCoO2, l'oxyde manganèse lithié, éventuellement substitué, LiMn2O4 ou un matériau à base de LiNixMnyCozO2 avec x+y+z = 1, tel que LiNi0.33Mn0.33Co0.33O2, ou un matériau à base de LiNixCoyAlzO2 avec x+y+z = 1, LiMn2O4, LiNiMnCoO2 ou l'oxyde de nickel cobalt aluminium lithié LiNiCoAlO2.

Description détaillée

D'autres avantages et caractéristiques de l'invention ressortiront mieux à la lecture de la description détaillée d'exemples de mise en oeuvre de l'invention faite à titre illustratif et non limitatif en référence aux figures suivantes parmi lesquelles :

- la figure 1 est une vue schématique en perspective éclatée montrant les différents éléments d'un accumulateur lithium-ion,
- la figure 2 est une vue de face montrant un accumulateur lithium-ion avec son emballage souple selon l'état de l'art,
- la figure 3 est une vue en perspective d'un exemple d'accumulateur lithium-ion selon l'état de l'art avec son emballage souple ;
- la figure 4 est une vue en perspective d'un accumulateur lithium-ion prismatique à empilement d'électrodes selon l'état de l'art;
- la figure 5 est une vue en perspective montrant un boitier rigide pour loger un accumulateur prismatique selon la figure 5;
- la figure 6 est une vue en perspective d'un autre exemple d'accumulateur lithium-ion selon l'état de l'art avec son emballage souple avant son intégration dans un module formant pack-batterie ;
- la figure 7 est une vue en perspective et en éclaté d'un sous-ensemble mécanique comprenant un accumulateur selon la figure 6 avant son assemblage dans un module formant pack-batterie ;
- la figure 8 est une vue en perspective et en éclaté d'un module formant pack-batterie dans lequel sont assemblés et maintenus une pluralité de sous-ensembles mécaniques selon la figure 7 ;
- les figures 9A et 9B sont des vues respectivement de côté et de dessus d'une électrode positive destinée à un accumulateur prismatique à empilement selon l'état de l'art ;
- les figures 10A et 10B sont des vues respectivement de côté et de dessus d'une électrode négative destinée à un accumulateur prismatique à empilement selon l'état de l'art;
- la figure 11 illustre sous forme de courbes le facteur d'échauffement en fonction du ratio épaisseur sur la surface de deux groupes d'accumulateurs prismatiques à empilement selon l'état de l'art;
- la figure 12 est une vue en coupe transversale d'un exemple d'empilement d'électrodes dans un accumulateur prismatique selon l'invention.

Par souci de clarté, les mêmes références désignant les mêmes éléments d'un accumulateur au lithium-ion selon l'état de l'art et selon l'invention sont utilisées pour toutes les figures 1 à 12.

On précise que les différents éléments selon l'invention sont représentés uniquement par souci de clarté et qu'ils ne sont pas à l'échelle.

On précise également que le terme de « longueur » et « latéral » se rapportant à une électrode est à considérer lorsqu'elle est à plat.

Les termes de «dessus » et «dessous » se rapportant à un accumulateur prismatique à empilement d'électrodes est à considérer en configuration à plat avec les surfaces d'électrode à l'horizontales et les faces d'extrémité respectivement sur le haut et sur le bas.

Les figures 1 à 11 ont déjà été commentées en détail en préambule. Elles ne sont donc pas décrites ci-après.

Comme détaillé en préambule, les inventeurs ont pu constater qu'un accumulateur Li-ion à forte capacité, tel qu'il est actuellement réalisé par empilement d'électrodes, présente des limites de design.

D'une part, il est difficilement envisageable d'augmenter leur épaisseur totale au-delà d'une certaine limite, afin d'augmenter la quantité d'énergie pour une surface donnée. En effet, des échauffements localisés peuvent se produire avec un fort risque de dysfonctionnement électrique et de sécurité.

De tels échauffements sont directement liés à la part de résistance ionique de l'accumulateur et aux conditions limites, contraignant l'évacuation de la puissance thermique dégagée.

D'autre part, l'augmentation de surface des électrodes au-delà d'une certaine limite oblige à abaisser le régime de passage de courant.

En effet, dans le cas d'électrodes de grandes surfaces, les lignes de courant qui s'établissent de la périphérie des électrodes jusqu'aux connectiques externes sont plus longues: les électrons ayant plus de distance à parcourir, la résistance électronique est de ce fait plus importante.

Aussi, les échauffements qui se produisent sont directement liés à la part de résistance électronique de la résistance interne globale de l'accumulateur.

Aussi, pour pallier ces inconvénients, et pouvoir proposer des accumulateurs Li-ion, à empilement de plus forte capacité , aptes à délivrer des fortes puissances sous des régimes de courant élevés, typiquement compris entre 2C et 5C, les inventeurs proposent une adaptation de la porosité des couches de matériau actif d'électrodes négatives 3 en fonction de leur position au sein de l'empilement.

En outre, on réalise une adaptation de l'épaisseur des couches de matériau actif des électrodes d'une même polarité (anode ou cathode) également en fonction de leur position au sein de l'empilement, l'épaisseur la plus faible étant celle des électrodes au centre de l'empilement, à l'exception de l'épaisseur des couches des électrodes à la porosité plus élevée.

Ainsi, on réalise au moins deux groupes d'électrodes d'épaisseurs différentes avec la plus faible valeur d'épaisseur au coeur (centre) de l'empilement, à l'exception des couches les plus poreuses

Dans l'exemple qui va suivre, les feuillards métalliques de section carrée ou rectangulaire supportant les matériaux actif d'insertion d'électrodes peuvent avoir une épaisseur comprise entre 5 et 50 $\mu$m.

Pour un feuillard d'anode 3, il peut s'agir avantageusement d'un feuillard en cuivre d'épaisseur de l'ordre de 12 $\mu$m.

Pour un feuillard de cathode 2, il peut s'agir avantageusement d'un feuillard en aluminium d'épaisseur de l'ordre de 20 $\mu$m.

Les électrodes positive 2 ou négative 3 selon l'invention, comprennent comme usuellement une bande latérale métallique ou rive dépourvue de matériau actif d'insertion et une portion centrale qui supporte une couche de matériau actif d'insertion continue sur toute sa longueur.

Dans un empilement selon l'invention, pour un dimensionnement des quantités d'énergies en vis-à-vis, les paramètres susceptibles de varier en fonction de la nature des matériaux d'électrodes utilisés sont les suivants :

a/ densité des matériaux actifs d'insertion,
b/ grammage des couches de matériaux actifs déposées,
c/ épaisseur des électrodes,
d/ porosité des électrodes.

En général, les épaisseurs des électrodes positives ne sont généralement pas égales à celles des électrodes négatives qui sont en vis-à-vis au sein d'un même empilement. En effet, comme précisé ci-dessus, les épaisseurs sont dépendantes de la nature des matériaux d'insertion utilisés et des densités d'énergie en vis-à-vis et des puissances requises, avec en général les paramètres a/, b/, c/ et d / différents entre électrodes positives et négatives.

On décrit maintenant un exemple de réalisation d'un accumulateur Li-ion constitué d'un empilement d'électrodes positives 2 et d'électrodes négatives 3 avec au moins deux valeurs de porosité différente de ces électrodes négatives 3 dans l'empilement, conformément à l'invention.

Dans cet exemple, les épaisseurs des couches actives des électrodes négative et positive augmentent de façon identique du coeur (centre) de l'empilement vers ses extrémités, à l'exception de la couche active des électrodes négatives plus poreuses au centre de l'empilement

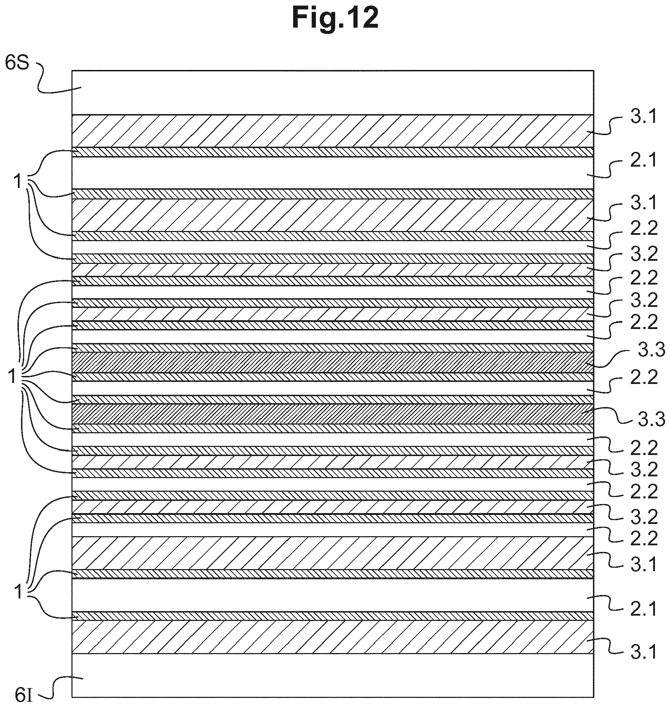

En outre, comme cela ressort explicitement de la figure 12, l'empilement d'électrodes dans l'épaisseur totale de l'accumulateur est symétrique entre faces de dessus 6S et de dessous 6I de l'empilement, constituées par les faces de l'emballage 6.

Cette symétrie permet d'assurer une homogénéité dans le dégagement d'énergie générée par effet joule. Autrement dit, la dissipation thermique peut s'opérer de façon équivalente sur les deux faces principales de l'accumulateur prismatique.

Dans cet exemple, les électrodes positives 2 ont chacune une couche de matériau actif d'insertion à base de LiFePO$_4$, de capacité théorique totale de 160 à 165 mAh/g, tandis que les couches actives des électrodes négatives sont à base de graphite, de capacité théorique totale de 390 à 400 mAh/g.

On réalise un empilement d'électrodes avec deux niveaux de porosités différentes pour les électrodes négatives, deux niveaux d'épaisseur différents, pour les électrodes positives et trois niveaux différents d'épaisseur pour les électrodes négatives. Cet exemple est illustré en figure 12.

L'épaisseur totale et le grammage des couches actives des électrodes négatives aux extrémités de l'empilement, i.e. les électrodes 3.1, sont supérieurs à celles adjacentes, i.e. les électrodes 3.2 au coeur de l'empilement, à l'exception des électrodes négatives 3.3 à porosité supérieure

Il en va de même avec les épaisseurs totales et le grammage des couches actives des électrodes positives, l'épaisseur totale et le grammage les plus faibles étant ceux de des électrodes positive 2.2 au centre, l'épaisseur et le grammage les plus importants étant ceux des électrodes positives 2.1 aux extrémités de l'empilement.

Les caractéristiques des couches actives des différentes électrodes dans cet exemple sont indiquées dans le tableau 3 ci-dessous.

On précise ici que la valeur de porosité, de grammage et d'épaisseur totale de chaque électrode est une valeur moyenne.

**TABLEAU 3**

| Types d'électrodes en fonction de leur position dans l'empilement | Grammage de la couche de matériau actif d'électrode (mg/cm$^2$/face de feuillard) | Epaisseur totale de l'électrode ($\mu$m (microns)) | Porosité de la couche de matériau actif d'électrode (%) |
|---|---|---|---|
| Electrode négative 3.1 | 11,0 | 170 | 30 à 36 |
| Electrode positive 2.1 | 25,0 | 265 | 33 à 39 |
| Electrode négative 3.2 | 9,0 | 140 | 30 à 36 |
| Electrode positive 2.2 | 20,0 | 215 | 33 à 39 |
| Electrode négative 3.3 | 9,0 | 160 | 39 à 45 |

D'autres variantes et améliorations peuvent être apportées sans pour autant sortir du cadre de l'invention.

On peut ainsi envisager différentes variantes de niveaux de porosité et d'épaisseur et de graduation d'épaisseur niveau par niveau.

L'invention n'est pas limitée aux exemples qui viennent d'être décrits ; on peut notamment combiner entre elles des caractéristiques des exemples illustrés au sein de variantes non illustrées.

Une électrode selon l'invention peut être réalisée quels que soient le matériau actif et les composants de l'électrode (collecteur, liants, conducteurs électroniques, additifs).

Les étapes d'empilement sont celles usuelles pour réaliser un accumulateur métal-ion à empilement.

Dans tous les exemples illustrés, on réalise les épaisseurs de couche de matériau actif d'insertion sur les deux faces du feuillard d'une même électrode donnée. Il va de soi que l'invention s'applique également à un empilement avec certaines couches de matériau actif qui ne seraient enduites que sur une seule des deux faces du feuillard. Cela peut concerner principalement les deux électrodes situées soit à l'extrémité supérieure soit à l'extrémité inférieure de l'empilement.

Dans tous les exemples illustrés, les électrodes positives présentent toutes une même porosité et les électrodes négatives présentent des polarités différentes au sein d'un même accumulateur. Cette configuration est celle privilégiée du fait que l'on cherche à maximiser la densité d'énergie volumique au sein de l'accumulateur. Ainsi, la porosité des électrodes positives est à priori la plus faible possible au regard de l'obtention de performances optimales.

Cela étant, on peut aussi envisager des électrodes positives avec des porosités différentes, dont celle(s) de plus forte porosité au centre de l'empilement de l'accumulateur et celle(s) de porosité moindre aux extrémités de l'empilement. Dans cette configuration, on conserve néanmoins une électrode négative de porosité plus élevée intercalée au centre de l'empilement.

## Références citées

[1]: « Thermal Characterization of Advanced Lithium-Ion Polymer Cells », Third Advanced Automotive Battery Conference, June 2003.
[2]: « Evaluation Study for Large Prismatic Lithium-Ion Cell Designs Using Multi-Scale Multi-Dimensional Battery Model », Gi-Heon Kim and Kandler Smith, ECS, 2004.

## Revendications

1. Accumulateur métal-ion (A), comprenant un empilement de cellules électrochimiques élémentaires comprenant chacune une cathode (2), une anode (3), et un séparateur (1) imprégné d'électrolyte intercalé entre l'anode et la cathode, chaque anode et cathode étant constituée d'un substrat (2S, 3S) formé d'un feuillard métallique comprenant une portion centrale (22, 32) supportant, sur au moins une de ses faces principales, une couche de matériau actif d'insertion d'ion métal, la porosité des couches de matériau actif des électrodes d'une des polarités données (anode, cathode) ayant au moins deux valeurs différentes dans l'empilement, la porosité la plus élevée étant celle d'au moins une électrode de ladite polarité agencée entre le centre et les extrémités de l'empilement.

2. Accumulateur métal-ion (A) selon la revendication 1, la porosité des couches de matériau actif de l'électrode négative la plus faible étant comprise entre 28 et 36%, tandis que la porosité la plus élevée est comprise entre 37 et 45%.

3. Accumulateur métal-ion (A) selon la revendication 1, la porosité des couches de matériau actif de l'électrode positive la plus faible étant comprise entre 21 et 31%, tandis que la porosité la plus élevée est comprise entre 32 et 42%.

4. Accumulateur métal-ion (A) selon l'une des revendications 1 à 3, l'épaisseur des couches de matériau actif des électrodes d'une même polarité (anode ou cathode) ayant au moins deux valeurs différentes au sein de l'empilement, l'épaisseur la plus faible étant celle des électrodes au centre de l'empilement, à l'exception de l'épaisseur des couches des électrodes à la porosité plus élevée.

5. Accumulateur métal-ion (A) selon l'une des revendications 1 à 4, les électrodes de porosité la plus élevée étant des électrodes négatives.

6. Accumulateur métal-ion (A) selon l'une des revendications précédentes, la variation d'épaisseur des électrodes négatives entre le centre et les extrémités de l'empilement étant comprise entre 20 et 200 $\mu$m.

7. Accumulateur métal-ion (A) selon l'une des revendications précédentes, la variation d'épaisseur des électrodes positives entre le centre et les extrémités de l'empilement étant comprise entre 20 et 200 $\mu$m.

8. Accumulateur métal-ion (A) selon l'une des revendications précédentes, la couche de matériau actif des électrodes négatives (3.1) en extrémité d'empilement présentant une épaisseur supérieure à 150 $\mu$m.

9. Accumulateur métal-ion (A) selon l'une des revendications précédentes, la couche de matériau actif des électrodes négatives (3.2) au centre de l'empilement, à l'exception de la couche de matériau actif des électrodes de plus grande porosité, présentant une épaisseur inférieure à 150 $\mu$m.

10. Accumulateur métal-ion (A) selon l'une des revendications précédentes, la couche de matériau actif des électrodes positives (2.1) en extrémité d'empilement présentant une épaisseur supérieure à 225 $\mu$m.

11. Accumulateur métal-ion (A) selon l'une des revendications précédentes, la couche de matériau actif des électrodes positives (2.2) au centre de l'empilement présentant une épaisseur inférieure à 225 $\mu$m.

**12.** Accumulateur métal-ion (A) selon l'une des revendications précédentes, le feuillard d'électrodes présentant une épaisseur comprise entre 10 et 20 $\mu$m.

**13.** Accumulateur métal-ion (A) selon l'une des revendications précédentes, le feuillard étant en aluminium ou en cuivre.

**14.** Accumulateur métal-ion (A) selon l'une des revendications précédentes, comprenant deux groupes d'électrodes négatives et positives à porosité moindre et un groupe d'électrodes négatives à porosité la plus élevée, l'épaisseur de couches de matériau actif d'une même polarité étant différente entre les deux groupes à porosité moindre, le premier groupe d'électrodes (2.1, 3.1) à porosité moindre étant agencé aux extrémités d'empilement, le second groupe (2.2, 3.2) à porosité moindre étant agencé au centre de l'empilement, avec au moins une électrode négative (3.3) du groupe à porosité plus élevée intercalée dans le deuxième groupe de porosité moindre.

**15.** Utilisation de l'accumulateur selon l'une des revendications précédentes pour des applications de type puissance correspondant à des régimes de courant typiquement compris entre 2C et 5C.

**16.** Batterie ou accumulateur au métal-ion, tel qu'un accumulateur lithium-ion (Li-ion) selon l'une quelconque des revendications 1 à 14, comportant un emballage souple (6) ou un boitier rigide dans lequel l'empilement est logé.

**17.** Batterie ou accumulateur Li-ion selon la revendication 16, dans laquelle :

- le boitier est à base d'aluminium ;
- le feuillard métallique d'électrode(s) négative(s) est en cuivre ;
- le matériau actif d'insertion d'électrode(s) négative(s) est choisi dans le groupe comportant le graphite, le lithium, l'oxyde de titanate $Li_4Ti_5O_{12;}$ ou à base de silicium ou à base de lithium, ou à base d'étain et de leurs alliages ;
- le feuillard métallique d'électrode(s) positive(s) est en aluminium;
- le matériau actif d'insertion d'électrode(s) positive(s) est choisi dans le groupe comportant le phosphate de fer lithié $LiFePO_4$, l'oxyde de cobalt lithié LiCo02, l'oxyde manganèse lithié, éventuellement substitué, $LiMn_2O_4$ ou un matériau à base de $LiNi_xMn_yCo_zO_2$ avec x+y+z = 1, tel que $LiNi_{0.33}Mn_{0.33}Co_{0.33}O_2$, ou un matériau à base de $LiNi_xCo_yAl_zO_2$ avec x+y+z = 1, $LiMn_2O_4$, $LiNiMnCoO_2$ ou l'oxyde de nickel cobalt aluminium lithié $LiNiCoAlO_2$.

**Patentansprüche**

**1.** Metallionen-Akkumulator (A), umfassend einen Stapel elementarer elektrochemischer Zellen, umfassend jeweils eine Kathode (2), eine Anode (3) und ein Trennelement (1), das mit Elektrolyt imprägniert ist, das zwischen der Anode und der Kathode angeordnet ist, wobei jede Anode und Kathode von einem Substrat (2S, 3S) gebildet ist, das von einem Metallblech gebildet ist, das einen mittleren Bereich (22, 32) umfasst, das auf mindestens einer seiner Hauptseiten eine Schicht aus aktivem Material zur Metallionen-Insertion trägt, wobei die Porosität der Schichten aus aktivem Material der Elektroden einer der gegebenen Polaritäten (Anode, Kathode) mindestens zwei verschiedene Werte in dem Stapel aufweist, wobei die höchste Porosität die von mindestens einer Elektrode der Polarität ist, die zwischen der Mitte und den Enden des Stapels angeordnet ist.

**2.** Metallionen-Akkumulator (A) nach Anspruch 1, wobei die geringste Porosität der Schichten aus aktivem Material der negativen Elektrode zwischen 28 und 36 % beträgt, während die höchste Porosität zwischen 37 und 45 % beträgt.

**3.** Metallionen-Akkumulator (A) nach Anspruch 1, wobei die geringste Porosität der Schichten aus aktivem Material der positiven Elektrode zwischen 21 und 31 % beträgt, während die höchste Porosität zwischen 32 und 42 % beträgt.

**4.** Metallionen-Akkumulator (A) nach einem der Ansprüche 1 bis 3, wobei die Dicke der Schichten aus aktivem Material der Elektroden einer selben Polarität (Anode oder Kathode) mindestens zwei verschiedene Werte innerhalb des Stapels aufweist, wobei die geringste Dicke jene der Elektroden in der Mitte des Stapels ist, mit Ausnahme der Dicke der Schichten der Elektroden höherer Porosität.

**5.** Metallionen-Akkumulator (A) nach einem der Ansprüche 1 bis 4, wobei die Elektroden höchster Porosität negative Elektroden sind.

6. Metallionen-Akkumulator (A) nach einem der vorhergehenden Ansprüche, wobei die Dickenabweichung der negativen Elektroden zwischen der Mitte und den Enden des Stapels zwischen 20 und 200 $\mu$m liegt.

7. Metallionen-Akkumulator (A) nach einem der vorhergehenden Ansprüche, wobei die Dickenabweichung der positiven Elektroden zwischen der Mitte und den Enden des Stapels zwischen 20 und 200 $\mu$m liegt.

8. Metallionen-Akkumulator (A) nach einem der vorhergehenden Ansprüche, wobei die Schicht aus aktivem Material der negativen Elektroden (3.1) am Stapelende eine Dicke größer als 150 $\mu$m aufweist.

9. Metallionen-Akkumulator (A) nach einem der vorhergehenden Ansprüche, wobei die Schicht aus aktivem Material der negativen Elektroden (3.2) in der Mitte des Stapels, mit Ausnahme der Schicht aus aktivem Material der Elektroden höherer Porosität, eine Dicke kleiner als 150 $\mu$m aufweist.

10. Metallionen-Akkumulator (A) nach einem der vorhergehenden Ansprüche, wobei die Schicht aus aktivem Material der positiven Elektroden (2.1) am Stapelende eine Dicke größer als 225 $\mu$m aufweist.

11. Metallionen-Akkumulator (A) nach einem der vorhergehenden Ansprüche, wobei die Schicht aus aktivem Material der positiven Elektroden (2.2) in der Mitte des Stapels eine Dicke kleiner als 225 $\mu$m aufweist.

12. Metallionen-Akkumulator (A) nach einem der vorhergehenden Ansprüche, wobei das Elektrodenblech eine Dicke zwischen 10 und 20 $\mu$m aufweist.

13. Metallionen-Akkumulator (A) nach einem der vorhergehenden Ansprüche, wobei das Blech aus Aluminium oder Kupfer ist.

14. Metallionen-Akkumulator (A) nach einem der vorhergehenden Ansprüche, umfassend zwei Gruppen negativer und positiver Elektroden geringerer Porosität und eine Gruppe negativer Elektroden höchster Porosität, wobei sich die Dicke von Schichten aus aktivem Material einer selben Polarität zwischen den zwei Gruppen geringerer Porosität unterscheidet, wobei die erste Gruppe von Elektroden (2.1, 3.1) geringerer Porosität an den Stapelenden angeordnet ist, wobei die zweite Gruppe (2.2, 3.2) geringerer Porosität in der Mitte des Stapels angeordnet ist, wobei mindestens eine negative Elektrode (3.3) der Gruppe höherer Porosität in der zweiten Gruppe geringerer Porosität eingelagert ist.

15. Nutzung des Akkumulators nach einem der vorhergehenden Ansprüche für Leistungsanwendungen, die Stromzuständen entsprechen, die typischerweise zwischen 2 C und 5 C liegen.

16. Metallionen-Batterie oder -Akkumulator, wie beispielsweise ein Lithiumionen (Li-Ionen)- Akkumulator nach einem der Ansprüche 1 bis 14, umfassend eine weiche Verpackung (6) oder ein hartes Gehäuse, worin der Stapel aufgenommen ist.

17. Li-Ionen-Batterie oder -Akkumulator nach Anspruch 16, wobei:

- das Gehäuse auf Aluminiumbasis ist;
- das Metallblech von (einer) negativen Elektrode(n) aus Kupfer ist;
- das aktive Material zur Insertion von (einer) negativen Elektrode(n) aus der Gruppe umfassend Graphit, Lithium, Titanat-Oxid $Li_4Ti_5O_{12}$ ausgewählt ist; oder auf Silizium- oder Lithiumbasis oder auf Basis von Zinn oder dessen Legierungen ist;
- das Metallblech von (einer) positiven Elektrode(n) aus Aluminium ist;
- das aktive Material zur Insertion von (einer) positiven Elektrode(n) aus der Gruppe umfassend Lithiumeisenphosphat $LiFePO_4$, Lithium-Cobalt-Oxid $LiCoO_2$, Lithium-Mangandioxid, das eventuell substituiert ist, $LiMn_2O_4$ oder ein Material auf Basis von $LiNi_xMn_yCo_zO_2$, wobei x+y+z = 1, wie beispielsweise $LiNi_{0,33}Mn_{0,33}Co_{0,33}O_2$, oder ein Material auf Basis von $LiNi_xCo_yAl_zO_2$, wobei x+y+z = 1, $LiMn_2O_4$, $LiNiMnCoO_2$ oder Lithium-Nickel-Cobalt-Aluminum-Oxid $LiNiCoAlO_2$ ausgewählt ist.

**Claims**

1. A metal-ion accumulator (A), comprising a stack of elementary electrochemical cells, each comprising a cathode (2), an anode (3), and a separator (1) impregnated with electrolyte intercalated between the anode and the cathode, each anode and cathode consisting of a substrate (2S, 3S) formed from a metal foil comprising a central portion (22, 32) supporting, on at least one of its main faces, a layer of active metal ion insertion material, the porosity of the layers of active material of the electrodes of one of the given polarities (anode or cathode) having at least two different values in the stack, the highest porosity being that of at least one electrode of said polarity, arranged between the center and the ends of the stack.

2. The metal-ion accumulator (A) according to Claim 1, the lowest porosity of the layers of active material of the negative electrode being between 28% and 36%, while the highest porosity is between 37% and 45%.

3. The metal-ion accumulator (A) according to Claim 1, the lowest porosity of the layers of active material of the positive electrode being between 21% and 31%, while the highest porosity is between 32% and 42%.

4. The metal-ion accumulator (A) according to Claims 1 to 3, the thickness of the layers of active material of the electrodes of the same polarity (anode or cathode) having at least two different values within the stack, the smallest thickness being that of the electrodes in the center of the stack, with the exception of the thickness of the layers of electrodes having the higher porosity.

5. The metal-ion accumulator (A) according to Claims 1 to 4, the electrodes having the highest porosity being negative electrodes.

6. The metal-ion accumulator (A) according to any of the preceding claims, the variation in thickness of the negative electrodes between the center and the ends of the stack being between 20 and 200 $\mu$m.

7. The metal-ion accumulator (A) according to any of the preceding claims, the variation in thickness of the positive electrodes between the center and the ends of the stack being between 20 and 200 $\mu$m.

8. The metal-ion accumulator (A) according to any of the preceding claims, the layer of active material of the negative electrodes (3.1) at the end of the stack having a thickness of more than 150 $\mu$m.

9. The metal-ion accumulator (A) according to any of the preceding claims, the layer of active material of the negative electrodes (3.2) in the center of the stack, with the exception of the layer of active material of the electrodes of higher porosity, having a thickness of less than 150 $\mu$m.

10. The metal-ion accumulator (A) according to any of the preceding claims, the layer of active material of the positive electrodes (2.1) at the end of the stack having a thickness of more than 225 $\mu$m.

11. The metal-ion accumulator (A) according to any of the preceding claims, the layer of active material of the positive electrodes (2.2) in the center of the stack having a thickness of less than 225 $\mu$m.

12. The metal-ion accumulator (A) according to any of the preceding claims, the electrode foil having a thickness of between 10 and 20 $\mu$m.

13. The metal-ion accumulator (A) according to any of the preceding claims, the foil being made of aluminum or copper.

14. The metal-ion accumulator (A) according to any of the preceding claims, comprising two groups of negative and positive electrodes of lower porosity and a group of electrodes having the highest porosity, the thickness of the layers of active material of the same polarity differing between the two groups of lower porosity, the first group of electrodes (2.1, 3.1) of lower porosity being arranged at the ends of the stack and the second group (2.2, 3.2) of lower porosity being arranged in the center of the stack, with at least one negative electrode of the group of higher porosity intercalated into the second group of lower porosity.

15. Use of the accumulator according to any of the preceding claims, for applications of the power type corresponding to current rates which are typically between 2 C and 5 C.

16. The metal-ion battery or accumulator, such as a lithium-ion (Li-ion) accumulator according to Claims 1 to 14, having a flexible shell or a rigid casing in which the stack is housed.

17. The Li-ion battery or accumulator according to Claim 16, wherein:

- the casing is aluminum-based;
- the metal foil of the negative electrode(s) is made of copper;
- the active insertion material of the negative electrode(s) is chosen from the group comprising graphite, lithium, and titanate oxide $Li_4Ti_5O_{12}$; or is based on silicon or lithium, or based on tin and alloys thereof;
- the metal foil of the positive electrode(s) is made of aluminum;
- the active insertion material of the positive electrode(s) is chosen from the group comprising lithium iron phosphate $LiFePO_4$, lithium cobalt oxide LiCo02, lithium manganese oxide, substituted if necessary, $LiMn_2O_4$, or a material based on $LiNi_xMn_yCo_zO_2$ where x+y+z = 1, such as $LiNi_{0.33}Mn_{0.33}Co_{0.33}O_2$, or a material based on $LiNi_xCo_yAl_zO_2$ where x+y+z = 1, $LiMn_2O_4$, $LiNiMnCoO_2$ or lithium nickel cobalt aluminum oxide $LiNiCoAlO_2$.

# Fig.1

# Fig.2

# Fig.3

(+) électrode 2

(-) électrode 3

séparateur 1

**Fig.4**

**Fig.5**

**Fig.6**

# Fig.7

# Fig.8

## Fig.9A

2S — 22 — 2 — 20 — 2I

## Fig.9B

20 — 2I

## Fig.10A

3S — 32 — 3 — 30 — 3I

## Fig.10B

3I — 30

## Fig.11

--●-- Groupe 1
——●—— Groupe 2

Facteur échauffement RI² / Masse

Ratio Epaisseur / Surface

# Fig.12

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20060121348 A
- US 7348098 B
- US 7338733 B
- US 2008060189 A
- US 20080057392 A
- US 7335448 B
- JP 2011018585 A

**Littérature non-brevet citée dans la description**

- Thermal Characterization of Advanced Lithium-Ion Polymer Cells. *Third Advanced Automotive Battery Conference,* Juin 2003
- **GI-HEON KIM ; KANDLER SMITH.** Evaluation Study for Large Prismatic Lithium-Ion Cell Designs Using Multi-Scale Multi-Dimensional Battery Model. *ECS,* 2004